Europäisches Patentamt

European Patent Office

Office européen des brevets

(11) Veröffentlichungsnummer: **0 099 455**
**B1**

(12) **EUROPÄISCHE PATENTSCHRIFT**

(19)

(45) Veröffentlichungstag der Patentschrift:
**29.10.86**

(21) Anmeldenummer: **83104936.6**

(22) Anmeldetag: **19.05.83**

(51) Int. Cl.⁴: **B 32 B 27/30,** C 08 L 27/06,
B 32 B 27/32, B 60 R 21/04,
B 60 R 13/02

(54) **Verbundfolien.**

(30) Priorität: **20.07.82 DE 3227107**

(43) Veröffentlichungstag der Anmeldung:
**01.02.84 Patentblatt 84/5**

(45) Bekanntmachung des Hinweises auf die Patenterteilung:
**29.10.86 Patentblatt 86/44**

(84) Benannte Vertragsstaaten:
**AT BE CH DE FR GB IT LI LU NL SE**

(56) Entgegenhaltungen:
**DE - A - 2 405 666**
**US - A - 3 582 451**
**US - A - 3 592 877**
**US - A - 3 780 140**
**US - A - 3 884 994**
**US - A - 4 189 520**

(73) Patentinhaber: **Alkor GmbH Kunststoffe,
Morgensternstrasse 9 Postfach 71 0109,
D-8000 München 71 (DE)**

(72) Erfinder: **Landler, Josef, Schiessstätt-Strasse 84,
D-8190 Wolfratshausen (DE)**

(74) Vertreter: **Seiler, Siegfried, Langhansstrasse 6,
D-5650 Solingen 11 (DE)**

## Beschreibung

Die vorliegende Erfindung betrifft tiefziehfähige Verbundfolien, insbesondere für Kraftfahrzeuginnenräume, und daraus hergestellte Formkörper oder Formkörperteile für den Kraftfahrzeuginnenraum, bestehend aus Polyvinylchlorid oder Gemischen von Acrylnitril-Butadien-Styrol-Copolymerisaten (ABS) mit Polyvinylchlorid, wobei die Folien ggf. auf einer Seite hinterschäumt sind. Diese tiefziehfähigen Verbundfolien weisen eine Dicke von 500 µm–1400 µm, vorzugsweise 600 µm–1200 µm auf, sind laminiert und in Form von Zwei- oder Mehrfachschichten aufgebaut. Sie bestehen aus einer weichmacherfreien oder weichmacherarmen Unterfolie aus Gemischen bzw. Legierungen von Acrylnitril-Butadien-Styrol-Copolymerisaten (ABS) mit Polyvinylchlorid sowie gegebenenfalls einem zusätzlichen Gehalt an Füllstoffen, Verarbeitungshilfsmitteln und/oder Mitteln zur Schwerentflammbarmachung und einer weichmacherfreien oder weichmacherarmen Oberfolie bestimmter Zusammensetzung.

Es sind bereits die unterschiedlichsten Verbundfolien, z.B. auf der Basis von weichgemachtem Polyvinylchlorid und Acrylnitril-Butadien-Styrol-Copolymerisaten mit weichmacherhaltigem PVC oder aus Hart-PVC oder aus anderen relativ starren bzw. harten Folien bekannt. Diese Folien haben offensichtlich aufgrund ihres Weichmachergehaltes den Nachteil, dass allmählich eine Verringerung der Dehnungswerte, eine Verschlechterung des Tiefziehverhaltens, der Kälteflexibilität und des Wärmealterungsverhaltens auftritt. Laminate aus starren bzw. harten Polymerisaten, beispielsweise aus Hart-PVC, besitzen den Nachteil der hohen Steifigkeit und einer geringen Kälteflexibilität.

In DE-A 2 405 666 wird eine geschäumte ABS- bzw. ABS-Legierungsfolie beschrieben, die mit einer Massivfolie zwecks Verbesserung des mechanischen Schutzes verbunden sein kann. Die Weichheit dieses Verbundes kann u.a. durch Weichmacherzusätze erzielt werden, die jedoch zu den vorhin beschriebenen Nachteilen führen.

Ziel und Aufgabe der vorliegenden Erfindung war es, diese Nachteile zu vermeiden tiefziehfähige Folien zu finden, die verbesserte Eigenschaften aufweisen, z.B. eine verbesserte Alterungsstabilität, keinen oder einen verminderten Abbau der Dehnungswerte, eine gute Lichtstabilität und andere verbesserte Eigenschaften (z.B. verbessertes Tiefziehverhalten) bieten. Die Folien sollten vor allem für Kraftfahrzeuginnenräume geeignet sein. Aus den Folien sollten Formkörper und Formkörperteile für die Kraftfahrzeuginnenräume hergestellt werden können, wobei die Folien auf einer Seite hinterschäumbar sein sollten.

Erfindungsgemäss wurde festgestellt, dass diesen Zielen und Aufgaben tiefziehfähige Verbundfolien gerecht werden, die unter Mitverwendung von Polyvinylchlorid oder aus Gemischen bzw. Legierungen von Acrylnitril-Butadien-Styrol-Copolymerisaten (ABS) mit Polyvinylchlorid sowie gegebenenfalls einem zusätzlichen Gehalt an Füllstoffen, Verarbeitungshilfsmitteln und/oder Mitteln zur Schwerentflammbarmachung hergestellt sind, wobei die Folien ggf. auf einer Seite hinterschäumt sind.

Diese (1.) tiefziehfähigen, ungeschäumten Verbundfolien weisen (1.1) eine Dicke von 500 µm–1400 µm, vorzugsweise 600 µm–1200 µm, auf, sind (1.2) laminiert und in Form von Zwei- oder Mehrfachschichten aufgebaut. Sie bestehen aus (2.) wenigstens einer von Primär- bzw. Flüssigweichmachern freien oder bis zu 3 Gew.% Primär- bzw. Flüssigweichmacher aufweisenden Unterfolie aus einer Mischung bzw. Legierung von Polyvinylchlorid (PVC) oder Vinylchlorid-Copolymerisaten mit bis zu 20 Gew.% olefinisch ungesättigten Monomeren, Acrylnitril-Butadien-Styrol-Copolymerisaten (ABS) sowie einem Plastifiziermittel auf der Basis eines plastifizierenden Hochpolymeren mit polaren Gruppen, das ein Molekulargewicht von grösser als 10 000, vorzugsweise grösser als 30 000, aufweist und mit Polyvinylchlorid eine Phase bildet oder mit Polyvinylchlorid verträglich ist oder (2.2) einer Mischung oder Legierung von a) Polyvinylchlorid oder Vinylchlorid-Copolymerisaten mit bis zu 20 Gew.% olefinisch ungesättigten Monomeren und b) Acrylnitril-Butadien-Styrol-Copolymerisaten (ABS) mit einem PVC-ABS-Gehalt von mehr als 40 Gew.%, vorzugsweise mehr als 50 Gew.% (bezogen auf 100 Gew.-Teile der Kunstharzmischung für die Unterfolie), mit c) einem Acrylnitril-Copolymerisat oder einem Kunstharzgemisch auf der Basis von Acrylnitril-Copolymerisat sowie d) einem Plastifiziermittel auf der Basis eines plastifizierenden Hochpolymeren mit polaren Gruppen, das ein Molekulargewicht von grösser als 10 000, vorzugsweise grösser als 30 000, aufweist und mit Polyvinylchlorid eine Phase bildet oder mit Polyvinylchlorid verträglich ist, und (3.) einer von Primär- oder Flüssigweichmachern freie oder bis zu weniger als 3 Gew.% Primär- bzw. Flüssigweichmacher enthaltende Oberfolie mit einer bestimmten Zusammensetzung. Die Oberfolie besitzt dabei (3.1) eine Dicke von 100–500 µm, vorzugsweise 120–200 µm und besteht aus (3.2.1) Polyvinylchlorid oder Vinylchlorid-Copolymerisaten mit bis zu 20 Gew.% olefinisch ungesättigten Monomeren sowie einem Plastifiziermittel auf der Basis eines plastifizierenden Hochpolymeren mit polaren Gruppen, das ein Molekulargewicht von grösser als 10 000, vorzugsweise grösser als 30 000, aufweist und mit Polyvinylchlorid eine Phase bildet oder mit Polyvinylchlorid verträglich ist, oder (3.2.2) Mischungen von Polyvinylchlorid oder Vinylchlorid-Copolymerisaten mit bis zu 20 Gew.% olefinisch ungesättigten Monomeren mit einem Acrylnitril-Copolymerisat oder einem Kunstharzgemisch auf der Basis von Acrylnitril-Copolymerisat sowie einem Plastifiziermittel auf der Basis eines plastifizierenden Hochpolymeren mit polaren Gruppen, das ein Molekulargewicht von grösser als 10 000, vorzugsweise grösser als 30 000, aufweist und mit Polyvinylchlorid eine Phase bildet oder mit Polyvinylchlorid verträglich ist.

Für die Unter- und/oder Oberfolie können vorzugsweise auch Vinylchlorid-Copolymerisate mit bis zu 10 Gew.% (bezogen auf 100 Gew.% Vinylchlorid-Copolymerisat) anderen olefinisch ungesättigten Monomeren Verwendung finden.

Als Vinylchloridpolymerisate werden bevorzugt Suspensions- und Blockpolymerisate für die Ober- und Unterfolie eingesetzt.

Nach einer bevorzugten Ausführungsform besteht (2.2.1) das Acrylnitril-Copolymerisat für die Unterfolie aus Styrol-Acrylnitril-Copolymerisat (SAN) und/oder Acrylnitril-Butadienharz (NBR).

Das Plastifiziermittel für die Ober- und/oder Unterfolie besteht aus einem plastifizierenden Hochpolymeren mit polaren Gruppen, das mit dem Polyvinylchlorid einen Glaspunkt (Tg) bildet, der zwischen dem Glaspunkt des PVC und dem Glaspunkt (Tg) des Plastifiziermittels liegt.

Nach einer bevorzugten Ausführungsform weist die Verbundfolie eine Shore-D-Härte von 40–70 auf.

Nach einer Ausführungsform besteht (3.2.2) das Acrylnitril-Copolymerisat der Oberfolie aus Styrol-Acrylnitril-Copolymerisat (SAN) und/oder Acrylnitril-Butadienharz (NBR).

Nach einer bevorzugten Ausführungsform beträgt der PVC-Gehalt der Oberfolie (bezogen auf die Kunstharzmischung bzw. -legierung, ohne Füllstoffe und Verarbeitungshilfsmittel) mehr als 50 Gew.%, vorzugsweise mehr als 60 Gew.%.

Das Verhältnis der Dicke von Oberfolie zu Unterfolie wird so eingestellt, dass es 1:1 bis 1:8, vorzugsweise 1:3 bis 1:7, beträgt.

Der Gehalt des polare Gruppen aufweisenden Plastifiziermittels oder Plastifiziermittelgemisches in der Unterfolie beträgt 5–30 Gew.%, vorzugsweise 7–23 Gew.% (bezogen auf die Kunstharzmischung der Unterfolie – gerechnet ohne Verarbeitungshilfsmittel, Zusatzstoffe, Füllmittel und dgl.).

Nach einer zweckmässigen Ausführungsform besteht das Plastifiziermittel aus einem Ethylen-Vinylacetat-Copolymerisat (EVA) mit polaren Gruppen und einem Vinylacetatgehalt von 60–80 Gew.%, vorzugsweise 65–70 Gew.%.

Nach einer anderen bevorzugten Ausführungsform besteht das Plastifiziermittel aus einem olefinischen Terpolymerisat mit statistisch verteilten Acetat- und Kohlenmonoxidgruppen. Die Begriffe «Kohlenmonoxidgruppe» und «Kohlenmonoxid» werden hier für den Begriff «Carbonylgruppe» ($> C = 0$) verwendet. Es weist ein Molekulargewicht grösser als 200 000 und eine Zusammensetzung von 50–79 Gew.%, vorzugsweise 57–72 Gew.% Ethylen, 35–15 Gew.%, vorzugsweise 29–19 Gew.% Vinylacetat und 15–6 Gew.%, vorzugsweise 14–9 Gew.% Kohlenmonoxid auf.

Nach einer anderen zweckmässigen Ausführungsform wird als Plastifiziermittel ein Polycaprolacton (PCL) mit polaren Gruppen verwendet.

Die Ober- und/oder Unterfolie enthalten cadmiumfreie Stabilisatoren, vorzugsweise Zinnstabilisatoren. Die Mischungen werden vorzugsweise unter Zusatz von Stabilisatoren, Antioxidantien, Verarbeitungshilfsmitteln usw. hergestellt.

Nach einer bevorzugten Ausführungsform besteht bzw. bestehen die Unterfolie bzw. Unterfolien aus 20–50 Gew.%, vorzugsweise 25–37 Gew.%, Polyvinylchlorid und 60–20 Gew.%, vorzugsweise 37–25 Gew.%, Acrylnitril-Butadien-Styrol-Copolymerisat (ABS) (bezogen auf die Kunstharzmischung bzw. -legierung ohne Verarbeitungshilfsmittel und Füllstoffe) sowie Restbestandteilen aus einem Plastifiziermittel oder Plastifiziermittelgemisch und Styrol-Acrylnitril-Copolymerisat (SAN) und/oder Acrylnitril-Butadienharz (NBA) und enthalten je 100 Gew.-Teile des Kunstharzgemisches zusätzlich 0,5–12 Gew.-Teile, vorzugsweise 1–7 Gew.-Teile, eines oder mehrerer Verarbeitungshilfsmittel sowie 0–40 Gew.-Teile, vorzugsweise 0,5–20 Gew.-Teile, eines Füllstoffes oder Füllstoffgemisches und/oder eines Mittels zum Schwerentflammbarmachen. Die Oberfolien enthalten bevorzugt dabei 10–35 Gew.%, vorzugsweise 18–30 Gew.%, eines Plastifiziermittels oder Plastifiziermittelgemisches (bezogen auf die Kunstharzmischung bzw. -legierung ohne Verarbeitungshilfsmittel und Füllstoffe) sowie je 100 Gew.-Teile des Kunstharzgemisches 0,5–12 Gew.-Teile, vorzugsweise 1–7 Gew.Teile, eines oder mehrerer Verarbeitungshilfsmittel. Gegebenenfalls können nach einer Ausführungsform je 100 Gew.-Teile der Kunststoffmischung 0–40 Gew.-Teile, vorzugsweise 0,5–20 Gew.-Teile, eines Füllstoffes oder Füllstoffgemisches und/oder eines Mittels zum Schwerentflammbarmachen zugefügt werden.

Nach einer Ausführungsform besteht die Unterfolie aus mehreren nach dem Coextrusions-, Kalandrier- oder Kaschierverfahren vereinigten Folien oder Folienschichten.

Zweckmässig enthalten somit gemäss dem Verfahren die Ober- und/oder Unterfolien zusätzliche Füllstoffe, Verarbeitungshilfsmittel und/oder Mittel zur Schwerentflammbarmachung.

Die Oberflächenfolie ist nach einer bevorzugten Ausführungsform mit einer Lackschicht oder Kunststoffbeschichtung, vorzugsweise auf der Basis von Acrylatharzen, Polyvinylchlorid-Acrylatharzen, Polyurethanharzen und/oder Epoxidharzen, auf ihrer freien Oberflächenschicht überzogen.

Aus den erfindungsgemässen Verbundfolien werden bevorzugt Formkörper oder Formkörperteile für Kraftfahrzeuginnenräume, Armaturenbretter von Kraftfahrzeugen sowie Sicherheitsabdeckungen, Seitenwände, Vorder- und Rückwandteile sowie Seitenpfosten und deren Sicherheitsabdeckungen für Kraftfahrzeuge und Flugzeuge hergestellt.

Die Herstellung erfolgt dabei so, dass zunächst die erfindungsgemässe Verbundfolie, die eine oder mehrere Unterfolien enthält, nach an sich bekannten Verfahren, z.B. unter Verwendung von Breitschlitzdüsen, Kalandriervorrichtungen oder im Coextrusionsverfahren hergestellt wird. Nachfolgend erfolgt das Tiefziehen der Verbundfolie, beispielsweise in einer Tiefziehform.

Die aus der Verbundfolie erhaltenen Formen, Formteile oder Formkörper, die vorzugsweise in Form von Armaturenbrettern, Seitenwänden, Rückwänden, Abdeckungen oder Teilen davon hergestellt werden, können jedoch unmittelbar eingesetzt oder in Form der hinterschäumten Formteile bzw. Formkörper benutzt werden.

Im letzteren Fall werden die aus der Verbundfolie hergestellten Formkörper und/oder -teile direkt ausgeschäumt oder zum Ausschäumen in eine Ausschäumform eingelegt. Zum Ausschäumen werden die an sich bekannten schäumbaren Kunststoffe, z.B. Polyurethanschaum und dgl. verwendet, denen je nach Art und Zusammensetzung der Kunststoffe, Treibmittel, Mittel zum Schwerentflammbarmachen, Hilfs- und Zusatzstoffe vor dem Verschäumen zugesetzt werden.

Die Dicke des Schaumes richtet sich nach dem vorgesehenen Einsatzzweck und der äusseren Form des Formteiles. Sie kann zwischen 1 mm–10 cm, vorzugsweise zwischen 3 mm bis 5 cm, liegen.

Unter weichmacherfrei wird im Rahmen der vorliegenden Erfindung verstanden, dass die Rezeptierungen frei von Primär- bzw. Flüssigweichmachern oder frei von anderen äusseren Weichmachern sind.

Sog. Polymer- bzw. Permanentweichmacher auf der Basis von polymeren, copolymeren oder terpolymeren Verbindungen fallen im Rahmen der vorliegenden Anmeldung nicht unter den Begriff Weichmacher bzw. weichmacherfrei und werden im Rahmen der Erfindung eingesetzt. Unter weichmacherarm wird verstanden, dass sie nur einen sehr geringen Gehalt von Primär- bzw. Flüssigweichmachern besitzen, beispielsweise bei Rezeptierungen, die Pigmente, Farbstoffe oder Füllstoffe mitenthalten.

Da sowohl die Oberfolien als auch die Unterfolien weichmacherarm (Weichmachergehalt geringer als 3 Gew.%), vorzugsweise weichmacherfrei von Primär- bzw. Flüssigweichmachern sind, besitzen die erfindungsgemässen Verbundfolien und die daraus hergestellten Formkörper oder Formkörperteile nur geringe fog-Werte. Bei den fog-Werten handelt es sich um Werte für die bei dem Erwärmen bzw. Erhitzen aus dem Kunststoff austretenden Bestandteile.

Die Härte der Oberfolie ist gleich oder kleiner als die Härte der Unterfolie. Durch die relativ geringe Härte der Oberfolie und durch die erfindungsgemässe Kombination und/oder Zusammensetzungen der Verbundfolien werden zusätzlich die Vorteile einer höheren Dehnfähigkeit, einer höheren Kälteflexibilität, eines verbesserten Fliessverhaltens bzw. Tiefziehens, einer verzögerten Rissbildung und einer geringeren Steifigkeit erzielt. Die Oberfolie kann zusätzlich noch Lichtstabilisatoren in geringen Gewichtsmengen enthalten.

Nach einer Ausführungsform wird die Oberfolie vorher bedruckt, beispielsweise in einem Prägekalander, mit der Unterfolie thermokaschiert und nachfolgend geprägt. Mit Hilfe der erfindungsgemässen Folie oder den daraus hergestellten Formkörpern oder Formkörperteilen gelingt es, die Alterungsstabilität zu verbessern und somit Risse in Armaturenbrettern durch Hitze oder Lichteinwirkung weitgehend zu vermeiden.

Die Ober- und/oder Unterfolien enthalten zweckmässig cadmiumfreie Stabilisatoren, vorzugsweise Zinnstabilisatoren.

Die Erfindung betrifft weiterhin ein Verfahren zur Herstellung tiefziehfähiger Verbundfolien, wobei die Kunststoffmischungen der Ober- und/oder Unterfolien in einem Extruder oder anderen, an sich bekannten Plastifiziervorrichtungen zusammen mit den Verarbeitungshilfsmitteln vermischt, erhitzt und plastifiziert sowie unter Bildung mehrerer Folien bzw. Schichten in einem Kalandrier-, Kaschier- und/oder Coextrusionsverfahren vereinigt werden. Die tiefziehfähigen, ungeschäumten Verbundfolien weisen (1.1) eine Dicke von 500 μm–1400 μm, vorzugsweise 600 μm–1200 μm, auf, sind (1.2) laminiert und in Form von Zwei- oder Mehrfachschichten aufgebaut. Sie bestehen aus (2.) wenigstens einer von Primär- bzw. Flüssigweichmachern freien oder bis zu 3 Gew.% Primär- bzw. Flüssigweichmacher aufweisenden Unterfolie aus einer Mischung bzw. Legierung von Polyvinylchlorid (PVC) oder Vinylchlorid-Copolymerisaten mit bis zu 20 Gew.% olefinisch ungesättigten Monomeren, Acrylnitril-Butadien-Styrol-Copolymerisaten (ABS) sowie einem Plastifiziermittel auf der Basis eines plastifizierenden Hochpolymeren mit polaren Gruppen, das ein Molekulargewicht von grösser als 10 000, vorzugsweise grösser als 30 000, aufweist und mit Polyvinylchlorid eine Phase bildet oder mit Polyvinylchlorid verträglich ist oder (2.2) einer Mischung oder Legierung von a) Polyvinylchlorid oder Vinylchlorid-Copolymerisaten mit bis zu 20 Gew.% olefinisch ungesättigten Monomeren und b) Acrylnitril-Butadien-Styrol-Copolymerisaten (ABS) mit einem PVC-ABS-Gehalt von mehr als 40 Gew.%, vorzugsweise mehr als 50 Gew.% (bezogen auf 100 Gew.-Teile der Kunstharzmischung für die Unterfolie), mit c) einem Acrylnitril-Copolymerisat oder einem Kunstharzgemisch auf der Basis von Acrylnitril-Copolymerisat sowie d) einem Plastifiziermittel auf der Basis eines plastifizierenden Hochpolymeren mit polaren Gruppen, das ein Molekulargewicht von grösser als 10 000, vorzugsweise grösser als 30 000, aufweist und mit Polyvinylchlorid eine Phase bildet oder mit Polyvinylchlorid verträglich ist, und (3.) einer von Primär- oder Flüssigweichmachern freien oder bis zu weniger als 3 Gew.% Primär- bzw. Flüssigweichmacher enthaltende Oberfolie mit einer bestimmten Zusammensetzung. Die Oberfolie besitzt dabei (3.1) eine Dicke von 100–500 μm, vorzugsweise 120–200 μm und besteht aus (3.2.1) Polyvinylchlorid oder Vinylchlorid-Copolymerisaten mit bis zu 20 Gew.% olefinisch ungesättigten Monomeren sowie einem Plastifiziermittel auf der Basis eines plastifizierenden Hochpolymeren mit polaren Gruppen, das ein Molekulargewicht von grösser als 10 000, vorzugsweise grösser als 30 000, aufweist und mit Polyvinylchlorid eine Phase bildet oder mit Polyvinylchlorid verträglich ist, oder (3.2.2) Mischungen von Polyvinylchlorid oder Vinylchlorid-Copolymerisaten mit bis zu 20 Gew.% olefinisch ungesättigten Monomeren einem Acrylnitril-Copolymerisat oder einem Kunstharzgemisch auf der Basis von Acrylnitril-Copolymerisat sowie einem Plastifiziermittel auf der Basis eines plastifizierenden Hochpolymeren mit polaren Gruppen, das ein Molekulargewicht von grösser als 10 000, vorzugsweise grösser als 30 000, aufweist und mit Polyvinylchlorid eine Phase bildet oder mit Polyvinylchlorid verträglich ist.

Es ist im Rahmen der vorliegenden Erfindung besonders zweckmässig, die Verbundfolien unter Verwendung an sich bekannter Prägevorrichtungen zu prägen, wobei vorzugsweise die Vorder- und die Rückseite dieser Folien mit einer anderen Prägung versehen werden.

Dabei werden die Folien unter Verwendung an sich bekannter Prägevorrichtungen, wie Prägekalander und dgl. geprägt. Nach der vorzugsweisen Ausführungsform erhält die Verbundfolie (Mehrschichtfolie) auch auf der Rückseite eine Präge- bzw. Narbenstruktur, die ein Blocken in der Tiefziehform vermeiden und gleichzeitig die Luftabführung zwischen dem Werkzeug und der Folie verbessern. Mittels der Präge- bzw. Narbenstruktur wird beim Ausschäumen mit einem Kunststoffschaum, beispielsweise Polyurethanschaum die Schaumhaftung an der Oberfläche der Folie wesentlich verbessert.

Beispiele
a) Beispiele für Zusammensetzung der Unterfolie

1. Suspensions-Polyvinylchlorid
K-Wert 70    30 Gew.-Teile
Acrylnitril-Butadien-Styrol-Copolymerisat (ABS)    30 Gew.-Teile
Styrol-Acrylnitril-Copolymerisat (SAN)    10 Gew.-Teile
Acrylnitril-Butadienharz (NBR)    10 Gew.-Teile
Polycaprolacton    <u>20 Gew.-Teile</u>
   100 Gew.-Teile

Stabilisatoren    2 Gew.-Teile
Antioxidantien und/oder
Gleitmittel    3 Gew.-Teile

2. Suspensions-Polyvinylchlorid
K-Wert 65    28 Gew.-Teile
Acrylnitril-Butadien-Styrol-Copolymerisat (ABS)    28 Gew.-Teile
Styrol-Acrylnitril-Copolymerisat (SAN)    17 Gew.-Teile
Terpolymerisat mit statistisch verteilten Acetat- und Kohlenmonoxidgruppen    <u>27 Gew.-Teile</u>
   100 Gew.-Teile

Stabilisatoren    2 Gew.-Teile
Antioxidantien und/oder
Gleitmittel    3 Gew.-Teile

3. Suspensions-Polyvinylchlorid
K-Wert 70    38 Gew.-Teile
Acrylnitril-Butadien-Styrol-Copolymerisat (ABS)    27 Gew.-Teile
Styrol-Acrylnitril-Copolymerisat (SAN)    14 Gew.-Teile
Acrylnitril-Butadienharz (NBR)    2 Gew.-Teile
Terpolymerisat mit statistisch verteilten Acetat-, Ethylen- und Kohlenmonoxidgruppen (in vorzugsweisen Gewichtsbereichen von 57–72 Gew.% Ethylen, 29–19 Gew.% Vinylacetat und 14–9 Gew.% Kohlenmonoxid)    <u>19 Gew.-Teile</u>
   100 Gew.-Teile

Stabilisatoren    2 Gew.-Teile
Antioxidantien und/oder
Gleitmittel    2,3 Gew.-Teile

4. Suspensions-Polyvinylchlorid
K-Wert 70    37 Gew.-Teile
Acrylnitril-Butadien-Styrol-Copolymerisat (ABS)    25 Gew.-Teile
Styrol-Acrylnitril-Copolymerisat (SAN)    9 Gew.-Teile
Acrylnitril-Butadienharz (NBR)    6 Gew.-Teile
Ethylen-Vinylacetat-Copolymerisat mit polaren Gruppen (mit einem Vinylacetatgehalt von 60–80 Gew.%)    <u>23 Gew.-Teile</u>
   100 Gew.-Teile

Stabilisatoren    1,0 Gew.-Teil
Antioxidantien und/oder
Gleitmittel    2,5 Gew.-Teile
Aluminiumhydroxid    1,7 Gew.-Teile

b) Beispiele für Zusammensetzung der Oberfolie

1. Suspensions-Polyvinylchlorid
K-Wert 70    76 Gew.-Teile
Polycaprolacton    <u>24 Gew.-Teile</u>
   100 Gew.-Teile

Stabilisator    1,5 Gew.-Teile
Antioxidantien und/oder
Gleitmittel    1,5 Gew.-Teile

2. Suspensions-Polyvinylchlorid
K-Wert 70    78 Gew.-Teile
Terpolymerisat mit statistisch verteilten Acetat-, Ethylen- und Kohlenmonoxidgruppen als Plastifiziermittel (in vorzugsweisen Gewichtsbereichen von 57–72 Gew.% Ethylen, 29–19 Gew.% Vinylacetat und 14–9 Gew.% Kohlenmonoxid)    <u>22 Gew.-Teile</u>
   100 Gew.-Teile

| Stabilisator | 1,5 Gew.-Teile |
| Antioxidantien und/oder Gleitmittel | 2,7 Gew.-Teile |

Zeichnungsbeschreibung

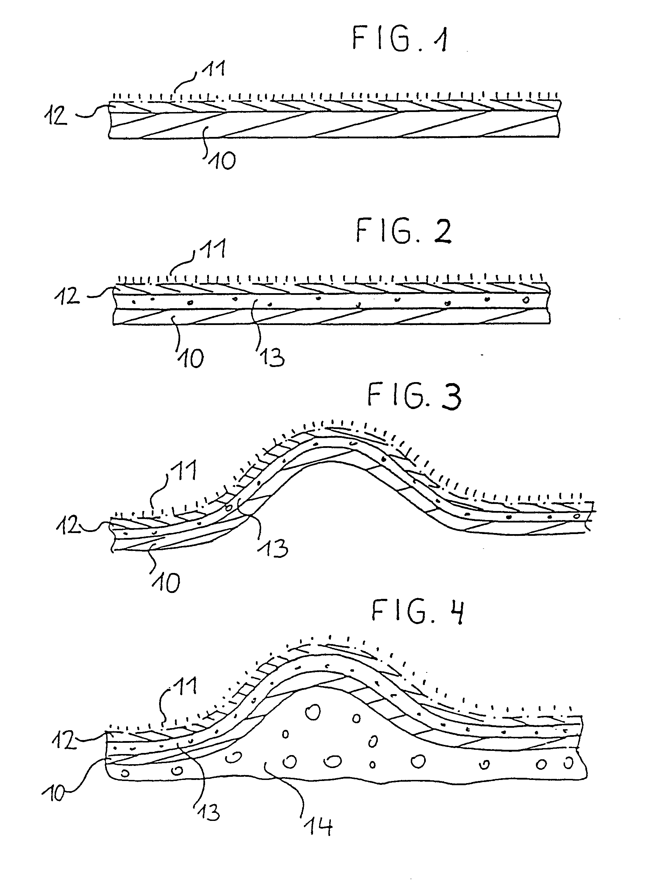

Die beigefügten Figuren 1–4 zeigen schematisch die erfindungsgemässen Folien.

In Fig. 1 ist die Unterfolie (10) mit der Oberfolie (12) zu sehen, auf deren Sichtseite eine Lackschicht (11), beispielsweise aus PVC-Acrylat-Lack, angebracht ist.

In Fig. 2 ist eine Mehrschichtfolie schematisch dargestellt. Die Unterfolien (10) und (13) können aus dem gleichen oder unterschiedlichen Material bestehen. Die Oberfolie (12) wird mit einer Beschichtung bzw. einem Lack versehen.

In Fig. 3 ist die in Fig. 2 dargestellte Mehrschichtfolie thermoplastisch verformt.

In Fig. 4 ist ein Formkörper dargestellt, bestehend aus der thermoplastisch verformten Mehrschichtfolie, die z.B. mit Polyurethanharzschaum (14) hinterschäumt ist.

1. Beispiel für Zusammensetzung der Oberfolie mit physikalischen Prüfwerten

| Suspensions-Polyvinylchlorid K-Wert 70 | 55 Gew.-Teile |
| Styrol-Acrylnitril-Copolymerisat (SAN) | 15 Gew.-Teile |
| Terpolymerisat mit statistisch verteilten Acetat- und Kohlenmonoxidgruppen | 30 Gew.-Teile |
| | 100 Gew.-Teile |
| Stabilisatoren | 1,9 Gew.-Teile |
| Antioxidantien und/oder Gleitmittel | 2,7 Gew.-Teile |

| Prüfmethode | Dimension | Prüfwerte |
| --- | --- | --- |
| Zugfestigkeit DIN 53455 Geschw. 100 mm/min | N/mm² | längs $\bar{x} = 32,2$ s $= 6,4$ <br> quer $\bar{x} = 33,4$ s $= 0,7$ |
| Bruchdehnung DIN 53455 Geschw. 100 mm/min | % | längs $\bar{x} = 357$ s $= 51$ <br> quer $\bar{x} = 390$ s $= 5$ |
| Vicat DIN 53460 | °C 1000 μ | 60 |
| Härte DIN 53505 | D-Shore | 56 |

2. Beispiel für Zusammensetzung der Unterfolie mit physikalischen Werten

| Suspensions-Polyvinylchlorid K-Wert 70 | 38 Gew.-Teile |
| Acrylnitril-Butadien-Styrol-Copolymerisat (ABS) | 27 Gew.-Teile |
| Styrol-Acrylnitril-Copolymerisat (SAN) | 14 Gew.-Teile |
| Acrylnitril-Butadienharz (NBR) | 2 Gew.-Teile |
| Terpolymerisat mit statistisch verteilten Acetat- und Kohlenmonoxidgruppen | 19 Gew.-Teile |
| | 100 Gew.-Teile |
| Stabilisatoren | 2 Gew.-Teile |
| Antioxidanten und/oder Gleitmittel | 2,3 Gew.-Teile |

| Prüfmethode | Dimension | Prüfwerte |
| --- | --- | --- |
| Zugfestigkeit DIN 53455 Geschw. 100 mm/min | N/mm² | längs $\bar{x} = 33$ s $= 1,9$ <br> quer $\bar{x} = 31$ s $= 1,2$ |
| Bruchdehnung DIN 53455 Geschw. 100 mm/min | % | längs $\bar{x} = 249$ s $= 27$ <br> quer $\bar{x} = 298$ s $= 13$ |
| Vicat DIN 53460 | °C 1000 μ | 97 |
| Härte DIN 53505 | D-Shore | 65 |

**Patentansprüche**

1. Tiefziehfähige Verbundfolien aus Polyvinylchlorid oder Gemischen von Acrylnitril-Butadien-Styrol-Copolymerisaten (ABS) mit Polyvinylchlorid sowie gegebenenfalls einem zusätzlichen Gehalt an Füllstoffen, Verarbeitungshilfsmitteln und/oder Mitteln zur Schwerentflammbarmachung, wobei die Folien gegebenenfalls auf einer Seite hinterschäumt sind, dadurch gekennzeichnet, dass die

1. tiefziehfähigen, ungeschäumten Verbundfolien

1.1 eine Dicke von 500 μm–1400 μm aufweisen,

1.2 laminiert und in Form von Zwei- oder Mehrfachschichten aufgebaut sind, die wenigstens

2. eine von Primär- bzw. Flüssigweichmachern freie oder bis zu weniger als 3 Gew.% Primär- bzw. Flüssigweichmacher aufweisende Unterfolie enthalten, die aus einer

2.1 Mischung von Polyvinylchlorid oder Vinylchlorid-Copolymerisaten mit bis zu 20 Gew.% olefinisch ungesättigten Monomeren, Acrylnitril-Butadien-Styrol-Copolymerisaten (ABS) sowie einem Plastifiziermittel auf der Basis eines plastifizierenden Hochpolymeren mit polaren Gruppen, das ein Molekulargewicht von grösser als 10 000 aufweist und mit Polyvinylchlorid eine Phase bildet oder mit Polyvinylchlorid verträglich ist oder einer

2.2 Mischung von a) Polyvinylchlorid oder Vinylchlorid-Copolymerisaten mit bis zu 20 Gew.% olefinisch ungesättigten Monomeren und b) Acrylnitril-Butadien-Styrol-Copolymerisaten (ABS) mit einem PVC-ABS-Gehalt von mehr als 40 Gew.% (bezogen auf 100 Gew.-Teile der Kunstharzmischung für die Unterfolie), mit c) einem Acrylnitril-Copolymerisat oder einem Kunstharzgemisch auf der Basis von Acrylnitril-Copolymerisat sowie d) einem Plastifiziermittel auf der Basis eines plastifizierenden Hochpolymeren mit polaren Gruppen, das ein Molekulargewicht von grösser als 10 000 aufweist und mit Polyvinylchlorid eine Phase bildet oder mit Polyvinylchlorid verträglich ist, besteht, und

3. eine von Primär- oder Flüssigweichmachern freie oder bis zu weniger als 3 Gew.% Primär- bzw. Flüssigweichmacher enthaltende Oberfolie mit

3.1 einer Dicke von 100–500 μm, enthalten, die

3.2.1 aus Polyvinylchlorid oder Vinylchlorid-Copolymerisaten mit bis zu 20 Gew.% olefinisch ungesättigten Monomeren sowie einem Plastifiziermittel auf der Basis eines plastifizierenden Hochpolymeren mit polaren Gruppen, das ein Molekulargewicht von grösser als 10 000 aufweist und mit Polyvinylchlorid eine Phase bildet oder mit Polyvinylchlorid verträglich ist, oder

3.2.2 Mischungen von Polyvinylchlorid oder Vinylchlorid-Copolymerisaten mit bis zu 20 Gew.% olefinisch ungesättigten Monomeren mit einem Acrylnitril-Copolymerisat oder einem Kunstharzgemisch auf der Basis von Acrylnitril-Copolymerisat sowie einem Plastifiziermittel auf der Basis eines plastifizierenden Hochpolymeren mit polaren Gruppen, das ein Molekulargewicht von grösser als 10 000 aufweist und mit Polyvinylchlorid eine Phase bildet oder mit Polyvinylchlorid verträglich ist, besteht.

2. Tiefziehfähige Verbundfolien gemäss Anspruch 1, dadurch gekennzeichnet, dass 2.2.1 das Acrylnitril-Copolymerisat aus Styrol-Acrylnitril-Copolymerisat (SAN) und/oder Acrylnitril-Butadienharz (NBR) besteht.

3. Tiefziehfähige Verbundfolien gemäss Ansprüchen 1 und 2, dadurch gekennzeichnet, dass das Plastifiziermittel für die Ober- und/oder Unterfolien aus einem plastifizierenden Hochpolymeren mit polaren Gruppen besteht, das mit dem Polyvinylchlorid einen Glaspunkt (Tg) bildet, der zwischen dem Glaspunkt des PVC und dem Glaspunkt (g) des Plastifiziermittels liegt.

4. Tiefziehfähige Verbundfolien gemäss Ansprüchen 1–3, dadurch gekennzeichnet, dass 3.2.2 das Acrylnitril-Copolymerisat aus Styrol-Acrylnitril-Copolymerisat (SAN) und/oder Acrylnitril-Butadienharz (NBR) besteht.

5. Tiefziehfähige Verbundfolien nach einem oder mehreren der Ansprüche 1 bis 4, dadurch gekennzeichnet, dass der PVC-Gehalt der Oberfolie (bezogen auf die Kunstharzmischung bzw. -legierung, ohne Füllstoffe und Verarbeitungshilfsmittel) mehr als 50 Gew.%, vorzugsweise mehr als 60 Gew.%, beträgt.

6. Tiefziehfähige Verbundfolien gemäss einem oder mehreren der Ansprüche 1–5, dadurch gekennzeichnet, dass das Dickenverhältnis von Oberfolie zu Unterfolie 1:1 bis 1:8, vorzugsweise 1:3 bis 1:7, beträgt.

7. Tiefziehfähige Verbundfolien gemäss einem oder mehreren der Ansprüche 1–6, dadurch gekennzeichnet, dass der Gehalt des polare Gruppen aufweisenden Plastifiziermittels oder Plastifiziermittelgemisches in der Unterfolie 5–30 Gew.%, vorzugsweise 7–23 Gew.% (bezogen auf die Kunstharzmischung der Unterfolie) beträgt.

8. Tiefziehfähige Verbundfolien gemäss einem oder mehreren der Ansprüche 1–7, dadurch gekennzeichnet, dass das Plastifiziermittel aus einem Ethylen-Vinylacetat-Copolymerisat (EVA) mit polaren Gruppen und einem Vinylacetatgehalt von 60–80 Gew.%, vorzugsweise 65–70 Gew.%, besteht.

9. Tiefziehfähige Verbundfolien gemäss einem oder mehreren der Ansprüche 1–7, dadurch gekennzeichnet, dass das Plastifiziermittel aus einem olefinischen Terpolymerisat mit statistisch verteilten Acetat- und Kohlenmonoxidgruppen besteht und ein Molekulargewicht von grösser als 200 000 sowie eine Zusammensetzung von

50–79 Gew.%, vorzugsweise

57–72 Gew.%, Ethylen,

35–15 Gew.%, vorzugsweise

29–19 Gew.%, Vinylacetat,

15–6 Gew.%, vorzugsweise

14–9 Gew.%, Kohlenmonoxid, aufweist.

10. Tiefziehfähige Verbundfolien gemäss einem oder mehreren der Ansprüche 1–7, dadurch gekennzeichnet, dass das Plastifiziermittel aus einem Polycaprolacton (PCL) mit polaren Gruppen besteht.

11. Tiefziehfähige Verbundfolien nach einem oder mehreren der Ansprüche 1–10, dadurch gekennzeichnet, dass die Unterfolie bzw. Unterfolien aus 20–50 Gew.%, vorzugsweise 25–37 Gew.%, Polyvinylchlorid und 60–20 Gew.%, vorzugsweise 37–25 Gew.%, Acrylnitril-Butadien-Styrol-Copolymerisat (ABS) (bezogen auf die Kunstharzmischung bzw. -legierung ohne Verarbeitungshilfsmittel und Füllstoffe) sowie Restbestandteilen aus einem Plastifiziermittel oder Plastifiziermittelgemisch und Styrol-Acrylnitril-Copolymerisat (SAN) und/oder Acrylnitril-Butadienharz (NBA) besteht bzw. bestehen und je 100 Gew.-Teile des Kunstharzgemisches 0,5–12 Gew.-Teile, vorzugsweise 1–7 Gew.-Teile, eines oder mehrerer Verarbeitungshilfsmittel sowie 0–40 Gew.-Teile, vorzugsweise 0,5–20 Gew.-Teile, eines Füllstoffes oder Füllstoffgemisches und/ oder eines Mittels zum Schwerentflammbarmachen enthält und dass die Oberfolie 10–35 Gew.%, vorzugsweise 18–30 Gew.%, eines Plastifiziermittels oder Plastifiziermittelgemisches (bezogen auf die Kunstharzmischung bzw. -legierung ohne Verarbeitungshilfsmittel und Füllstoffe) sowie je 100 Gew.-Teile des Kunstharzgemisches 0,5–12 Gew.-Teile, vorzugsweise 1–7 Gew.-Teile, eines oder mehrerer Verarbeitungshilfsmittel sowie 0–40 Gew.-Teile, vorzugsweise 0,5–20 Gew.-Teile, eines Füllstoffes oder Füllstoffgemisches und/ oder eines Mittels zum Schwerentflammbarmachen enthält.

12. Tiefziehfähige Verbundfolien gemäss Ansprüchen 1–11, dadurch gekennzeichnet, dass die Ober- und/oder Unterfolien cadmiumfreie Stabilisatoren, vorzugsweise Zinnstabilisatoren enthalten.

13. Verfahren zur Herstellung tiefziehfähiger Verbundfolien, wobei die Kunststoffmischungen der Ober- und/oder Unterfolien in einem Extruder oder anderen, an sich bekannten Plastifiziervorrichtungen zusammen mit den Verarbeitungshilfsmitteln vermischt, erhitzt und plastifiziert sowie unter Bildung mehrerer Folien bzw. Schichten in einem Kalandrier-, Kaschier- und/oder Coextrusionsverfahren vereinigt werden, dadurch gekennzeichnet, dass die tiefziehfähigen, ungeschäumten Verbundfolien 1.1 eine Dicke von 500 µm–1400 µm aufweisen, 1.2 laminiert und in Form von Zwei- oder Mehrfachschichten aufgebaut sind, die wenigstens 2. eine von Primär- bzw. Flüssigweichmachern freie oder bis zu weniger als 3 Gew.% Primär- bzw. Flüssigweichmacher aufweisende Unterfolie enthalten, die aus einer 2.1 Mischung von Polyvinylchlorid oder Vinylchlorid-Copolymerisaten mit bis zu 20 Gew.% olefinisch ungesättigten Monomeren, Acrylnitril-Butadien-Styrol-Copolymerisaten (ABS) sowie einem Plastifiziermittel auf der Basis eines plastifizierenden Hochpolymeren mit polaren Gruppen, das ein Molekulargewicht von grösser als 10 000 aufweist und mit Polyvinylchlorid eine Phase bildet oder mit Polyvinylchlorid verträglich ist oder einer 2.2 Mischung von a) Polyvinylchlorid oder Vinylchlorid-Copolymerisaten mit bis zu 20 Gew.% olefinisch ungesättigten Monomeren und b) Acrylnitril-Butadien-Styrol-Copolymerisaten (ABS) mit einem PVC-ABS-Gehalt von mehr als 40 Gew.% (bezogen auf 100 Gew.-Teile der Kunstharzmischung für die Unterfolie), mit c) einem Acrylnitril-Copolymerisat oder einem Kunstharzgemisch auf der Basis von Acrylnitril-Copolymerisat sowie d) einem Plastifiziermittel auf der Basis eines plastifizierenden Hochpolymeren mit polaren Gruppen, das ein Molekulargewicht von grösser als 10 000 aufweist und mit Polyvinylchlorid eine Phase bildet oder mit Polyvinylchlorid verträglich ist, besteht, und

3. eine von Primär- oder Flüssigweichmachern freie oder bis zu weniger als 3 Gew.% Primär- bzw. Flüssigweichmacher enthaltende Oberfolie mit 3.1 einer Dicke von 100–500 µm, enthalten, die 3.2.1 aus Polyvinylchlorid oder Vinylchlorid-Copolymerisaten mit bis zu 20 Gew.% olefinisch ungesättigten Monomeren sowie einem Plastifiziermittel auf der Basis eines plastifizierenden Hochpolymeren mit polaren Gruppen, das ein Molekulargewicht von grösser als 10 000 aufweist und mit Polyvinylchlorid eine Phase bildet oder mit Polyvinylchlorid verträglich ist, oder 3.2.2 Mischungen von Polyvinylchlorid oder Vinylchlorid-Copolymerisaten mit bis zu 20 Gew.% olefinisch ungesättigten Monomeren mit einem Acrylnitril-Copolymerisat oder einem Kunstharzgemisch auf der Basis von Acrylnitril-Copolymerisat sowie einem Plastifiziermittel auf der Basis eines plastifizierenden Hochpolymeren mit polaren Gruppen, das ein Molekulargewicht von grösser als 10 000 aufweist und mit Polyvinylchlorid eine Phase bildet oder mit Polyvinylchlorid verträglich ist, besteht.

14. Verfahren nach Anspruch 13, dadurch gekennzeichnet, dass die Verbundfolien unter Verwendung an sich bekannter Prägevorrichtungen geprägt werden, vorzugsweise Vorder- und Rückseite der Folien mit einer anderen Prägung versehen werden.

**Revendications**

1. Feuilles composites emboutissables en polychlorure de vinyle ou en mélanges de copolymères nitrile acrylique-butadiène-styrène (ABS) et de polychlorure de vinyle pouvant éventuellement contenir en supplément des matières de charge, des adjuvants de transformation et/ou des agents pour rendre difficilement inflammable, lesdites feuilles pouvant éventuellement être doublées de mousse d'un côté, caractérisées en ce que les

1. feuilles composites emboutissables, non moussées,

1.1 présentent une épaisseur de 500 μm–1400 μm,

1.2 sont stratifiées et élaborées sous la forme de couches doubles ou multiples, qui comprennent au moins

2. une feuille inférieure, exempte de plastifiants primaires ou liquides ou contenant moins de 3% en poids de plastifiants primaires ou liquides, consistant en

2.1 un mélange de polychlorure de vinyle ou de copolymère de chlorure de vinyle contenant jusqu'à 20% en poids de monomères oléfiniquement insaturés, de copolymère nitrile acrylique-butadiène-styrène (ABS) ainsi que d'un plastifiant à base d'un liant polymère plastifiant comportant des groupes polaires, ayant un poids moléculaire supérieur à 10 000 et formant une phase avec le polychlorure de vinyle ou bien étant compatible avec le polychlorure de vinyle, ou en

2.2 un mélange a) de polychlorure de vinyle ou copolymère de chlorure de vinyle contenant jusqu'à 20% en poids de monomères oléfiniquement insaturés et b) de copolymère nitrile acrylique-butadiène-styrène (ABS) ayant une teneur en PVC-ABS de plus de 40% en poids (par rapport à 100 parties en poids du mélange de résines synthétiques dans la feuille inférieure), avec c) un copolymère de nitrile acrylique ou un mélange de résines synthétiques à base de copolymère de nitrile acrylique ainsi que d) un plastifiant à base d'un haut polymère plastifiant comportant des groupes polaires, ayant un poids moléculaire supérieur à 10 000 et formant une phase avec le polychlorure de vinyle ou bien étant compatible avec le polychlorure de vinyle, et

3. une feuille supérieure, exempte de plastifiants primaires ou liquides ou contenant moins de 3% en poids de plastifiants primaires ou liquides, qui

3.1 présente une épaisseur de 100–500 μm et qui consiste

3.2.1 en polychlorure de vinyle ou en copolymère de chlorure de vinyle contenant jusqu'à 20% en poids de monomères oléfiniquement insaturés ainsi qu'en un plastifiant à base d'un haut polymère plastifiant comportant des groupes polaires, ayant un poids moléculaire supérieur à 10 000 et formant une phase avec le polychlorure de vinyle ou bien étant compatible avec le polychlorure de vinyle, ou

3.2.2 en mélanges de polychlorure de vinyle ou de copolymère de chlorure de vinyle contenant jusqu'à 20% en poids de monomère oléfiniquement insaturé avec un copolymère de nitrile acrylique ou un mélange de résines synthétiques à base de copolymère de nitrile acrylique ainsi qu'avec un plastifiant à base d'un haut polymère plastifiant comportant des groupes polaires, ayant un poids moléculaire supérieur à 10 000 et formant une phase avec le polychlorure de vinyle ou bien étant compatible avec le polychlorure de vinyle.

2. Feuilles composites emboutissables suivant la revendication 1 caractérisées en ce que

2.2.1 le copolymère de nitrile acrylique consiste en copolymère styrène-nitrile acrylique (SAN) et/ou en résine nitrile acrylique-butadiène (NBR).

3. Feuilles composites emboutissables suivant les revendications 1 et 2 caractérisées en ce que le plastifiant pour les feuilles supérieure et/ou inférieure(s) consiste en un haut polymère plastifiant comportant des groupes polaires qui forme avec le polychlorure de vinyle un point de transition vitreuse (Tg) situé entre celui du PVC et celui du plastifiant.

4. Feuilles composites emboutissables suivant les revendications 1–3 caractérisées en ce que 3.2.2 le copolymère de nitrile acrylique consiste en copolymère styrène-nitrile acrylique (SAN) et/ou en résine nitrile acrylique-butadiène (NBR).

5. Feuilles composites emboutissables suivant une ou plusieurs des revendications 1 à 4 caractérisées en ce que la teneur en PVC de la feuille supérieure (par rapport au mélange ou à l'alliage de résines synthétiques, à l'exclusion des matières de charge et des adjuvants de transformation) est supérieure à 50% en poids, de préférence supérieure à 60% en poids.

6. Feuilles composites emboutissables suivant une ou plusieurs des revendications 1 à 5 caractérisées en ce que le rapport entre les épaisseurs de la feuille supérieure et de la feuille inférieure est compris entre 1:1 et 1:8, de préférence entre 1:3 et 1:7.

7. Feuilles composites emboutissables suivant une ou plusieurs des revendications 1 à 6 caractérisées en ce que la teneur en plastifiant ou en mélange plastifiant comportant des groupes polaires, dans la feuille inférieure, est de 5–30% en poids, de préférence 7–23% en poids (par rapport au mélange de résines synthétiques de la feuille inférieure).

8. Feuilles composites emboutissables suivant une ou plusieurs des revendications 1 à 7 caractérisées en ce que le plastifiant consiste en un copolymère éthylène-acétate de vinyle (EVA) comportant des groupes polaires et ayant une teneur en acétate de vinyle de 60–80% en poids, de préférence de 65–70% en poids.

9. Feuilles composites emboutissables suivant une ou plusieurs des revendications 1 à 7 caractérisées en ce que le plastifiant consiste en un terpolymère oléfinique présentant des groupes d'acétate et de monoxyde de carbone répartis statistiquement et ayant un poids moléculaire supérieur à 200 000 et la composition suivante
50–79% en poids, de préférence
57–72% en poids, d'éthylène,
35–15% en poids, de préférence
29–19%, d'acétate de vinyle,
15–6% en poids, de préférence
14–9% en poids, de monoxyde de carbone.

10. Feuilles composites emboutissables suivant une ou plusieurs des revendications 1 à 7 caractérisées en ce que le plastifiant consiste en une polycaprolactone (PCL) comportant des groupes polaires.

11. Feuilles composites emboutissables suivant une ou plusieurs des revendications 1 à 10 caractérisées en ce que la feuille ou les feuilles inférieure(s) consiste(nt) en
20–50% en poids, de préférence
25–37% en poids,
de polychlorure de vinyle et en
60–20% en poids, de préférence
37–25% en poids,
de copolymère nitrile acrylique-butadiène-styrène (ABS) (par rapport au mélange ou à l'alliage de résines synthétiques, sans les adjuvants de transformation ni les matières de charge) ainsi qu'en les proportions restantes d'un plastifiant ou mélange de plastifiant et de copolymère styrène-nitrile acrylique (SAN) et/ou de résine nitrile acrylique-butadiène (NBR), et comprend ou comprennent en supplément, pour 100 parties en poids de mélange de résines synthétiques,
0,5–12 parties en poids, de préférence,
1–7 parties en poids,
d'un ou plusieurs adjuvant(s) de transformation ainsi que
0–40 parties en poids, de préférence
0,5–20 parties en poids,
d'une matière de charge ou d'un mélange de matières de charge et/ou d'un agent pour rendre difficilement inflammable, et en ce que la feuille supérieure contient
10–35% en poids, de préférence
18–30% en poids,
d'un plastifiant ou d'un mélange de plastifiants (par rapport au mélange ou à l'alliage de résines synthétiques, sans les adjuvants de transformation ni les matières de charge), ainsi que pour 100 parties en poids de mélange de résines synthétiques
0,5–12 parties en poids, de préférence
1–7 parties en poids,
d'un ou plusieurs adjuvant(s) de transformation et
0–40 parties en poids, de préférence
0,5–20 parties en poids,
d'une matière de charge ou d'un mélange de matières de charge et/ou d'un agent pour rendre difficilement inflammable.

12. Feuilles composites emboutissables suivant les revendications 1 à 11 caractérisées en ce que les feuilles supérieure et/ou inférieure(s) contiennent des stabilisants exempts de cadmium, de préférence des stabilisants à l'étain.

13. Procédé de fabrication de feuilles composites emboutissables dans lequel on mélange, chauffe et plastifie les mélanges de résines synthétiques des feuilles supérieure et inférieure(s) dans une boudineuse ou dans d'autres dispositifs de plastification connus en soi, en même temps que les adjuvants de transformation, et on les unit en formant plusieurs feuilles ou plusieurs couches suivant un procédé de calandrage, de

doublage et/ou de coextrusion caractérisé en ce que les feuilles composites emboutissables, non moussées
1.1 présentent une épaisseur de 500 μm–1400 μm,
1.2 sont stratifiées et élaborées sous la forme de couches doubles ou multiples qui comprennent au moins

2. une feuille inférieure, exempte de plastifiants primaires ou liquides ou contenant moins de 3% en poids de plastifiants primaires ou liquides, consistant en
2.1 un mélange de polychlorure de vinyle ou d'un copolymère de chlorure de vinyle contenant jusqu'à 20% en poids de monomères oléfiniquement insaturés, de copolymère nitrile acrylique-butadiène-styrène (ABS) ainsi que d'un plastifiant à base d'un haut polymère plastifiant comportant des groupes polaires, ayant un poids moléculaire supérieur à 10 000 et formant une phase avec le polychlorure de vinyle ou bien étant compatible avec le polychlorure de vinyle, ou en
2.2 un mélange a) de polychlorure de vinyle ou de copolymère de chlorure de vinyle contenant jusqu'à 20% en poids de monomères oléfiniquement insaturés et b) de copolymère nitrile acrylique-butadiène-styrène (ABS), ayant une teneur en PVC-ABS de plus de 40% en poids (par rapport à 100 parties en poids de mélange de résines synthétiques dans la feuille inférieure), avec c) un copolymère de nitrile acrylique ou un mélange de résines synthétiques à base de copolymère de nitrile acrylique ainsi que d) un plastifiant à base d'un haut polymère plastifiant comportant des groupes polaires, ayant un poids moléculaire supérieur à 10 000 et formant une phase avec le polychlorure de vinyle ou bien étant compatible avec le polychlorure de vinyle, et

3. une feuille supérieure, exempte de plastifiants primaires ou liquides ou contenant moins de 3% en poids de plastifiants primaires ou liquides, qui
3.1 présente une épaisseur de 100–500 μm et qui consiste
3.2.1 en polychlorure de vinyle ou en copolymère de chlorure de vinyle contenant jusqu'à 20% en poids de monomères oléfiniquement insaturés ainsi qu'en un plastifiant à base d'un haut polymère plastifiant comportant des groupes polaires, ayant un poids moléculaire supérieur à 10 000 et formant une phase avec le polychlorure de vinyle ou bien étant compatible avec le polychlorure de vinyle, ou
3.2.2 en mélanges de polychlorure de vinyle ou de copolymère de chlorure de vinyle contenant jusqu'à 20% en poids de monomères oléfiniquement insaturés avec un copolymère de nitrile acrylique ou un mélange de résines synthétiques à base de copolymère de nitrile acrylique ainsi qu'avec un plastifiant à base d'un haut polymère plastifiant comportant des groupes polaires, ayant un poids moléculaire supérieur à 10 000 et formant une phase avec le polychlorure de vinyle ou bien étant compatible avec le polychlorure de vinyle.

14. Procédé suivant la revendication 13 caractérisé en ce que les feuilles composites sont grainées en utilisant des dispositifs de grainage connus en soi, la face avant et la face arrière des feuilles étant de préférence munies de grainages différents.

## Claims

1. Composite sheets, capable of being deep drawn, of polyvinyl chloride, or of mixtures of acrylonitrile-butadiene-styrene copolymers (ABS) with polyvinyl chloride and if required an additional content of fillers, processing additives and/or agents for imparting flameresistance, in which the sheets are foam-backed if required on one side, characterised in that the

1. unfoamed composite sheets, capable of being deep drawn,

1.1 have a thickness of 500 μm–1,400 μm,

1.2 are laminated and are composed in the form of two layers or a plurality of layers, which include at least

2. a lower sheet which is free of primary or liquid softeners or which has up to less than 3% by weight primary or liquid softeners, which lower sheet consists of a

2.1 mixture of polyvinyl chloride or vinyl chloride copolymers with up to 20% by weight olefinically unsaturated monomers, acrylonitrile-butadiene-styrene copolymers (ABS) and a plasticizer on the basis of a plasticizing high polymer with polar groups, which has a molecular weight of greater than 10,000 and forms a phase with polyvinyl chloride or is compatible with polyvinyl chloride or consists of a

2.2 mixture of a) polyvinyl chloride or vinyl chloride copolymers with up to 20% by weight olefinically unsaturated monomers and b) acrylonitrile-butadiene-styrene copolymers (ABS) with a PVC-ABS content of more than 40% by weight (in relation to 100 parts by weight of the synthetic resin mixture for the lower sheet), with c) an acrylonitrile copolymer or a synthetic resin mixture on the basis of acrylonitrile copolymer and d) a plasticizer on the basis of a plasticizing high polymer with polar groups, which has a molecular weight of greater than 10,000 and forms a phase with polyvinyl chloride or is compatible with polyvinyl chloride, and

3. include an upper sheet which is free of primary or liquid softeners or which contains up to less than 3% by weight primary or liquid softeners with

3.1 a thickness of 100–500 μm, which

3.2.1 consists of polyvinyl chloride or vinyl chloride copolymers with up to 20% by weight olefinically unsaturated monomers and a plasticizer on the basis of a plasticizing high polymer with polar groups, which has a molecular weight of greater than 10,000 and forms a phase with polyvinyl chloride or is compatibel with polyvinyl chloride, or

3.2.2 consists of mixtures of polyvinyl chloride or vinyl chloride copolymers with up to 20% by weight olefinically unsaturated monomers with an acrylonitrile copolymer or a synthetic resin mixture on the basis of acrylonitrile copolymer and a plasticizer on the basis of a plasticizing high polymer with polar groups, which has a molecular weight of greater than 10,000 and forms a phase with polyvinyl chloride or is compatible with polyvinyl chloride.

2. Composite sheets, capable of being deep drawn according to Claim 1, characterised in that 2.2.1 the acrylonitrile copolymer consists of styrene-acrylonitrile copolymer (SAN) and/or acrylonitrile-butadiene resin (NBR).

3. Composite sheets, capable of being deep drawn, according to Claims 1 and 2, characterised in that the plasticizer for the upper and/or lower sheets consists of a plasticizing high polymer with polar groups, which forms with the polyvinyl chloride a glass point (Tg) which lies between the glass point of the PVC and the glass point (g) of the plasticizer.

4. Composite sheets, capable of being deep drawn, according to Claims 1 to 3, characterised in that 3.3.2 the acrylonitrile copolymer consists of styrene-acrylonitrile copolymer (SAN) and/or acrylonitrile butadiene resin (NBR).

5. Composite sheets, capable of being deep drawn, according to one or more of Claims 1 to 4, characterised in that the PVC-content of the upper sheet (in relation to the synthetic resin mixture or alloy, without fillers and processing additives) amounts to more than 50% by weight, preferably more than 60% by weight.

6. Composite sheets, capable of being deep drawn, according to one or more of Claims 1 to 5, characterised in that the thickness ratio of upper sheet to lower sheet is from 1 : 1 to 1 : 8, preferably 1 : 3 to 1 : 7.

7. Composite sheets, capable of being deep drawn, according to one or more of Claims 1 to 6, characterised in that the content of the polar group-containing plasticizer or plasticizer mixture in the lower sheet is 5 to 30% by weight, preferably 7 to 23% by weight (in relation to the synthetic resin mixture of the lower sheet).

8. Composite sheets, capable of being deep drawn, according to one or more of Claims 1 to 7, characterised in that the plasticizer consists of an ethylene-vinyl acetate copolymer (EVA) with polar groups and a vinyl acetate content of 60 to 80% by weight, preferably 65 to 70% by weight.

9. Composite sheets, capable of being deep drawn, according to one or more of Claims 1 to 7, characterised in that the plasticizer consists of an olefinic terpolymer with statistically distributed acetate and carbon monoxide (carbonyl) groups and has a molecular weight greater than 200,000 and a composition of

50 to 79% by weight, preferably
57 to 72% by weight, ethylene,
35 to 15% by weight, preferably
29 to 19% by weight, vinyl acetate,
15 to 6% by weight, preferably
14 to 9% by weight, carbon monoxide.

10. Composite sheets, capable of being deep drawn, according to one or more of Claims 1 to 7, characterised in that the plasticizer consists of a polycaprolactone (PCL) with polar groups.

11. Composite sheets, capable of being deep drawn, according to one or more of Claims 1 to 10, characterised in that the lower sheet or lower sheets consists or consist of
20 to 50% by weight, preferably
25 to 37% by weight,
polyvinyl chloride and
60 to 20% by weight, preferably
37 to 25% by weight
acrylonitrile-butadiene-styrene copolymer (ABS) (in relation to the synthetic resin mixture or alloy without processing additives and fillers) and residual components of a plasticizer or plasticizer mixture and styrene acrylonitrile copolymer (SAN) and/or acrylonitrile-butadiene resin (NBA) and per 100 parts by weight of the synthetic resin mixture contains
0.5 to 12 parts by weight, preferably
1 to 7 parts by weight
of one or more processing additives, and also
0 to 40 parts by weight, preferably
0.5 to 20 parts by weight
of a filler or mixture of fillers and/or of an agent for imparting flame-resistance and that the upper sheet contains
10 to 35% by weight, preferably
18 to 30% by weight
of a plasticizer or plasticizer mixture (in relation to the synthetic resin mixture or alloy without processing additives and filler), and also contains per 100 parts by weight of the synthetic resin mixture
0.5 to 12 parts by weight, preferably
1 to 7 parts by weight
of one or more processing adjuvants, and also
0 to 40 parts by weight, preferably
0.5 to 20 parts by weight
of a filler or mixture of fillers and/or of an agent for imparting flame-resistance.

12. Composite sheets, capable of being deep drawn, according to Claims 1 to 11, characterised in that the upper and/or lower sheets contain cadmium-free stabilizers, preferably tin stabilizers.

13. Method for the production of composite sheets, capable of being deep drawn, in which the synthetic material mixture of the upper and/ or lower sheets are mixed, in an extruder or in other plasticizing devices known per se, together with the processing additives, are heated and plasticized and with the formation of several sheets or respectively layers are combined in a calendering, laminating and/or co-extrusion process, characterised in that the unfoamed composite sheets, capable of being deep drawn,
1.1 have a thickness of 500 μm to 1,400 μm,
1.2 are laminated and composed in the form of two layers
or a plurality of layers, which include at least
2. a lower sheet which is free of primary or liquid softeners or which has up to less than 3% by weight primary or liquid softeners, which lower sheet consists of a
2.1 mixture of polyvinyl chloride or vinyl chloride copolymers with up to 20% by weight olefinically unsaturated monomers, acrylonitrile-butadiene-styrene copolymers (ABS) and a plasticizer on the basis of a plasticizing high polymer with polar groups, which has a molecular weight of greater than 10,000 and forms a phase with polyvinyl chloride or is compatible with polyvinyl chloride, or consists of a
2.2 mixture of a) polyvinyl chloride or vinyl chloride copolymers with up to 20% by weight olefinically unsaturated monomers and b) acrylonitrile-butadiene-styrene copolymers (ABS) with a PVS-ABS content of more than 40% by weight (in relation to 100 parts by weight of the synthetic resin mixture for the lower sheet), with c) an acrylonitrile copolymer or a synthetic resin mixture on the basis of acrylonitrile copolymer and d) a plasticizer on the basis of a plasticizing high polymer with polar groups, which has a molecular weight of greater than 10,000 and forms a phase with polyvinyl chloride, or is compatible with polyvinyl chloride, and
3. include an upper sheet which is free of primary or liquid softeners or which contains up to less than 3% by weight primary or liquid softeners, with
3.1 a thickness of 100 to 500 μm, which
3.2.1 consists of polyvinyl chloride or vinyl chloride copolymers with up to 20% by weight olefinically unsaturated monomers and a plasticizer on the basis of a plasticizing high polymer with polar groups, which has a molecular weight of greater than 10,000 and forms a phase with polyvinyl chloride or is compatible with polyvinyl chloride, or
3.2.2 consists of mixtures of polyvinyl chloride or vinyl chloride copolymers with up to 20% by weight olefinically unsaturated monomers with an acrylonitrile copolymer or a synthetic resin mixture on the basis of acrylonitrile copolymer and a plasticizer on the basis of a plasticizing high polymer with polar groups, which has a molecular weight of greater than 10,000 and forms a phase with polyvinyl chloride or is compatible with polyvinyl chloride.

14. Method according to Claim 13, characterised in that the composite sheets are stamped, using stamping devices known per se, preferably the front and reverse sides of the sheets are provided with a different stamping.

# FIG. 1

# FIG. 2

# FIG. 3

# FIG. 4